## Europäisches Patentamt
## European Patent Office
## Office européen des brevets

(11) Publication number: **0 107 651**
**B1**

(12) **EUROPEAN PATENT SPECIFICATION**

(45) Date of publication of patent specification: **30.12.86**

(51) Int. Cl.⁴: **B 23 B 51/00**

(21) Application number: **82901683.1**

(22) Date of filing: **16.04.82**

(86) International application number:
**PCT/US82/00487**

(87) International publication number:
**WO 83/03563 27.10.83 Gazette 83/25**

(54) **DRILL BIT FOR FIBER REINFORCED PLASTICS.**

(43) Date of publication of application:
**09.05.84 Bulletin 84/19**

(45) Publication of the grant of the patent:
**30.12.86 Bulletin 86/52**

(84) Designated Contracting States:
**DE FR GB**

(56) References cited:
**AU-B- 158 036
CS-B- 80 109
FR-A-1 252 565
US-A-2 334 845
US-A-2 746 722
US-A-2 962 066
US-A-3 263 721
US-A-3 701 188
US-A-4 043 698
US-A-4 120 601**

(73) Proprietor: **FORD-WERKE
AKTIENGESELLSCHAFT
Ottoplatz 2 Postfach 21 03 69
D-5000 Köln 21 (DE)**

(84) **DE**

(73) Proprietor: **FORD FRANCE SOCIETE ANONYME
344 Avenue Napoléon Bonaparte B.P. 307
F-92506 Rueil Malmaison Cedex (FR)**

(84) **FR**

(73) Proprietor: **FORD MOTOR COMPANY LIMITED
Eagle Way
Brentwood Essex CM13 3BW (GB)**

(84) **GB**

(72) Inventor: **SKIDMORE, Michael L.
2880 Sitka Court
Ann Arbor, MI 48103 (US)**

(74) Representative: **Messulam, Alec Moses et al
A. Messulam & Co. 24 Broadway
Leigh on Sea Essex SS9 1BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Technical Field

The present invention relates to a rotary drill bit, and more particularly to a rotary drill bit adapted to drill a sharply defined hole throughout fiber reinforced plastic with a single pass of the drill bit.

Background Art

Fiber reinforced plastic materials are well known to offer many physical properties advantageous in the fabrication of devices such as, for example, automotive vehicle body panels and aircraft body panels and the like. Both thermoplastics and thermoset plastics are used in such fiber reinforced plastic materials. Known fibers include, for example, nylon, Kevlar (trademark, DuPont de Nemours and Company, Wilmington, Delaware), graphite and most commonly glass fibers.

It is often necessary to drill holes through fiber reinforced plastic panels to provide a means of attachment of the panel, for example, to a second such panel, or to a device to be mounted thereon or for various other reasons. While drill bits are known which are suitable to provide a drilled hole through fiber reinforced plastic, a drill bit is needed which produces a sharply defined hole without leaving fiber-overhang and without causing so-called "volcanoing". Fiber-overhang is the presence of short lengths of reinforcing fibers extending from the surface of the fiber reinforced material into or about the drilled hole. When a drill bit of known design is passed through a fiber reinforced plastic section to provide a drilled hole, some reinforcing fibers within the drilled hole are not cut exactly at the surface of the drilled hole. Rather, short lengths of such fibers remain, which extend from the plastic at the surface of the drilled hole. So-called "volcanoing" is the bulging of the surface of the fiber reinforced plastic at the edge of the drilled hole, typically on the exit side of the hole. This is due, at least in part, to fracturing of the reinforced plastic as the drill bit approaches and breaks through the surface of the fiber-reinforced plastic material at the exit side of the drilled hole. Both fiber-overhang and volcanoing present aesthetic disadvantages. In addition, both fiber-overhang and volcanoing present serious disadvantages in subsequent fabrication steps employing the fiber reinforced plastic section. For example, if a reinforced plastic panel is intended to be joined to another panel through the drilled hole, with planar surface contact between them, volcanoing can, in effect, increase the thickness of the fiber reinforced panel at the attachment location and thus prevent close contact between the two joined panels. The result can be decreased structural rigidity, decreased strength, a greater likelihood of attachment failure, and increased fabricating costs.

While drilled holes of poor quality can be improved by additional processing steps subsequent to drilling, such additional processing steps entail increased fabrication costs and decreased production efficiency.

The principle object of the present invention is to provide a new and improved drill bit for drilling holes through fiber reinforced plastic. More particularly, it is an object of this invention to provide a drill bit which provides, at conventional machining speeds, a hole of improved quality, specifically a sharply defined hole without volcanoing and without fiber-overhang. In addition, it is an object of this invention to provide such a drill bit which can be easily fabricated at relatively low cost. It is yet another object to provide a drill bit which has high strength and durability and low fragility.

Various drill bits designs are known to the skilled of the art. U.S. Patent No. 3,170,224 discloses a rotary cutting tool in which the backface of the drill head is provided with a cutting edge so as to either deburr or chamfer the work piece. U.S. Patent No. 2,575,239 discloses a drill bit shank having a transversly extending slot 11 and a reversible bit. U.S. Patent No. 4,040,764 discloses a tool holder 10 and Fig. 1 therein illustrates the tool holder holding a cutting tool 13, which cutting tool is a spade drill. U.S. Patent No. 4,120,601 discloses a spade drill in which the drill head is inserted into a slotted blade holder. A cutting edge 17 is shown. The blade extension 11 also appears to disclose a cutting edge. The width of the spade drill is apparently wider than the circumference of the drill holder. All such known drill bits, however, fail to provide a sharply defined drilled hole by a single pass through and back out of fiber reinforced plastic. Finally, U.S. Patent No. 3,824,027 shows a reamer attached to a reduced diameter rod portion 18, which connects the reamer to a rear shank portion 21 which is apparently smaller in diameter than the reamer. U.S. Patent No. 2,746,722 discloses a reversible drill bit in which a washer bit 12 is employed in combination with a standard drill head. The washer bit is provided with cutting projections 38 which are adapted to engage the inner surface of the drill hold and perform chipping operations so as to facilitate the removal of the entire drill bit assembly.

The above described and still further objects of the present invention will be apparent from the following detailed specification, appended claims and attached drawings.

Disclosure of Invention

The objects of the invention are realized in accordance with the present invention by providing a rotary drill bit for drilling fiber reinforced plastics, which drill bit comprises:

a spade drill head comprising a central axis, a leading point at its front end and a primary cutting edge sloped rearward and axially outward from said leading point;

a disc-shaped base integral with and axially aligned with the drill head, having a diameter substantially equal to the width of the drill head wherein the radially outward edge of the rearward face of the base is sufficiently sharp to form a fiber cutting edge; and

a collar integral with and axially aligned with the base, having a diameter substantially less than that of the base.

The drill bit of the invention preferably is used in conjunction with a suitable drill bit shank. The drill bit is formed integrally with such shank or is formed separately and fitted into the end of such shank to be integral therewith. The shank is axially aligned with the drill bit, having diameter less than or equal to that of the base.

Brief Description of the Drawing

Referring to the drawings, wherein like characters indicate like parts throughout the several views:

Fig. 1 is an elevation view of a drill bit according to a preferred embodiment of the present invention fitted in a suitable drill bit shank.

Fig. 2 is a plan view of the drill bit of Fig. 1 shown protruding through a drilled hole prior to withdrawal of the drill bit through the drilled hole.

Fig. 3 is a view taken from line 3—3 along the axis of the drill bit of Fig. 1.

Detailed Description of the Invention

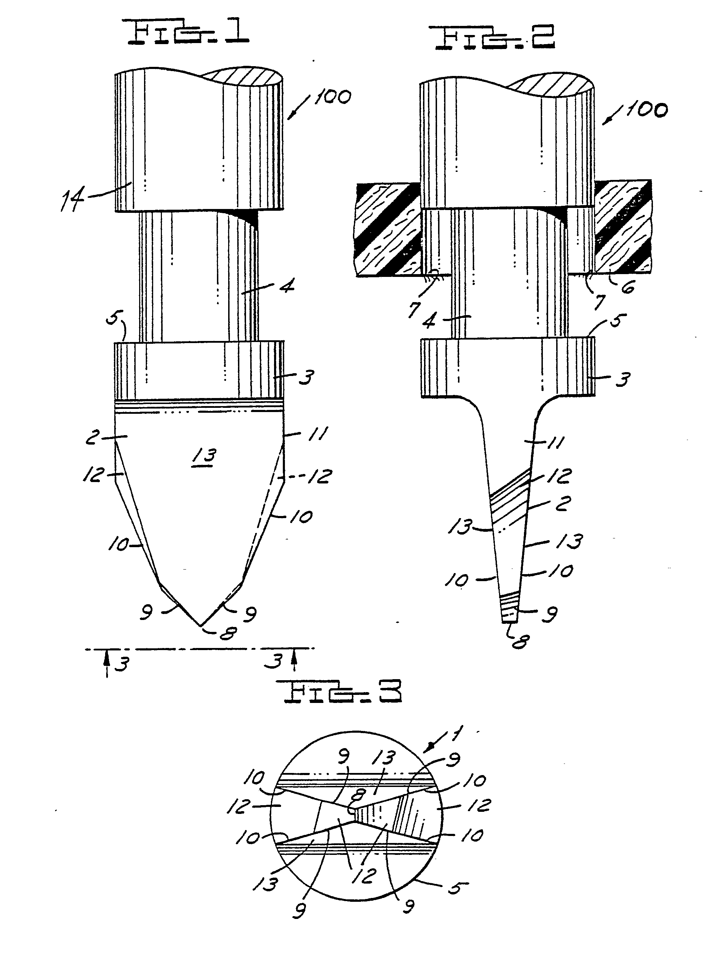

Referring now to the drawings, Figs. 1—3 illustrate a rotary drill bit 100 according to a preferred embodiment of the present invention. The drill bit comprises a spade drill head 2 integral with and axially aligned with disc-shaped base 3. The disc-shaped base has a substantially uniform diameter substantially equal to the width of the spade drill head measured at the widest point of the spade drill head. A collar 4, preferably cylindrical, is integral with and axially aligned with the aforesaid base. The collar has a diameter substantially less than that of the base. The radially outward edge 5 of the base forms a sharp corner. That is, it forms a corner of non-radiused edge. In the manufacture of a drill bit, for example, in machining it, the rearward surface of the base proximate to edge 5 and the outside surface of the base are made to form a non-broken edge. In this way, edge 5 forms a cutting edge sufficiently sharp to cut off any fiber-overhang in the drilled hole upon withdrawal of the drill bit through the fiber reinforced plastic. That is, when the drill bit is withdrawn back through the fiber reinforced plastic after first passing through to form the drilled hole, the edge 5 forms a reverse cutting edge which is highly effective in removing fiber over-hang from the drilled hole. The base 3 preferably has sufficient axial height to provide strength and wear-resistance for the reverse cutting edge. Thus, for example, for a drill bit to provide a ⁹⁄₆₄th inch (.36 cm) hole, it is preferred that the base have an axial height of about ¹⁄₁₆th inch (.16 cm). Since the fibers used in fiber reinforced plastic can have a diameter as small as .001 inch (.003 cm) or less, it will be evident that to provide removal of substantially all fiber overhang it will be necessary that the reverse cutting edge, and therefore also the base, at edge 5, must have a diameter substantially equal to the diameter of the drilled hole. Accordingly the diameter of the base must be substantially equal to the width of the spade drill head measured at its widest point. For many typical applications the preferred diameter for the drilled hole, and hence the preferred diameter for the spade drill head and the base is from about .19 inch (.48 cm) to about .26 inch (.66 cm).

It will be apparent from the foregoing description that the collar portion of the drill bit is recessed to allow the uncut fibers remaining on the surface of the drilled hole (after the drill bit has passed into and through but not yet back through the fiber reinforced plastic) to spring or fall away from the wall of the drilled hole into the open space surrounding the collar. As the drill bit is being withdrawn back through the fiber reinforced plastic to complete a single pass of the drill bit, the uncut fibers are thus presented to be cut by the reverse cutting edge. The collar is preferably cylindrical and in drill bits according to the invention wherein the diameter of the spade drill head and base is, for example, from about .19 inch (.48 cm) to about .26 inch (.66 cm), it is generally most preferred that the collar portion have a diameter of about .09 inch (.23 cm) to about .13 inch (.33 cm), respectively. Likewise, the collar should be long enough, i.e., have sufficient axial length, to permit the overhanging fibers to spring or fall into the gap surrounding the collar as the drill bit is being withdrawn at routine machining speeds out of the fiber reinforced plastic. In general, it is not necessary or even desirable that the collar be equal in length to the thickness of the fiber reinforced plastic. For many typical applications, wherein the diameter of the spade drill head and base is from about .19 inch (.48 cm) to about .26 inch (.66 cm), it is preferred that the collar have an axial height of about .135 inch (.34 cm).

Opposite the drill head and base, the collar preferably is integrally attached to a suitable stem or shank 14 of substantially uniform diameter. The shank diameter is preferably less than or equal to that of the base of the drill bit. More preferably the shank has a diameter only minimally less than that of the base. Thus, for example, the shank may typically be .001 inch (.003 cm) less in diameter than the base. This prevents binding when the shank passes through the drilled hole.

Referring to Fig. 2, upon withdrawal of the drill bit back through the fiber reinforced plastic 6, the reverse cutting edge 5 will encounter the fiber over-hang 7 which is in the open space surrounding the collar 4, and will cut off such fiber over-hang substantially at the surface of the drilled hole.

The spade drill head can comprise any suitable design of which numerous variations are known to the skilled of the art. From the leading point 8 of the drill head, that is, from the point which first contacts the fiber reinforced plastic, a primary cutting edge 9 extends axially rearward towards the base and collar. The angle of the primary cutting edge, that is the primary entry angle should be sufficiently acute to minimize or avoid any break-out effects causing the aforementioned volcanoing which often occurs in the drilling of reinforced plastic. Preferably the primary entry angle, measured as the acute angle of intersection between the axis of the drill bit and the primary cutting edge, is about 30° to about 60°, most preferably about 45°.

At greater primary entry angle, for example, near 60°, the spade drill head will be less fragile, but in using the drill bit, since there is a shorter cutting edge, greater axial drilling pressure will be required and greater wear can result. In addition, a greater tendency to cause volcanoing can result. At a lesser primary entry angle, for example, at or near 30°, the spade drill head will tend to be somewhat more fragile near the leading point, but will require less axial drilling pressure and will suffer less wear.

The entire cutting edge of the drill head can be presented at the above described primary entry angle. Alternately, a portion of the cutting edge can be provided at the primary cutting angle and a portion extending axially rearward of the primary cutting edge can be provided at a secondary entry angle. Accordingly, as illustrated by the preferred embodiment of Figs. 1—3, a portion of the cutting edge, secondary cutting edge, is provided at a more acute angle than the primary entry angle. Preferably, the cutting edge of the spade drill head provides a secondary entry angle of from about 15° to about 45°, most preferably about 22°.

One or more additional portions of the cutting edge can be extended axially rearward from the secondary cutting edge at greater or lesser entry angle(s). Preferably the cutting edge does not extend to the base. Rather, the cutting edge preferably reaches its maximum width and terminates somewhat above, that is, axially forward of the base. The edge of the spade drill head can then extend axially rearward to the base through a tertiary portion 11 parallel or substantially parallel to the axis of the drill bit. In this case, the spade drill head can be said to provide a tertiary entry angle more acute than the secondary entry angle, more specifically this preferred embodiment provides a tertiary entry angle of 0° or approximately 0°.

According to a preferred embodiment, and as shown in Figs. 1—3, the narrow sides of the spade drill head, that is the thin strip of surface 12 adjacent each cutting edge preferably has a rake or back-draft of about 10°. Providing such rake has been found to provide greater ease of machining and a more sharply defined drill hole. Such rake is especially advantageous where the thickness of the spade drill head, that is the distance between the opposing faces 13 of the spade drill head, where the spade drill head meets the base, approaches or equals the full diameter of the drill bit. It should be understood that there need not be a sharp line of demarcation between the base and the spade drill head. Rather the two opposing faces of the spade drill head can fair gradually into the full diameter of the base. Alternatively, the thickness of the spade drill head where it meets the base can be substantially less than the diameter of the drill bit. Where the thickness of the spade drill head is substantially less than the diameter of the drill bit, the two faces of the spade drill head can be flat and either parallel or convergent toward the leading point such that the spade drill head is more narrow toward the leading point. Preferably they are convergent. Most preferably, the two faces of the spade drill head are flat, that is planar, or substantially flat, and convergent toward the leading point, such that the two faces form an angle of intersection with the axis of the drill bit of from about 1° to about 15°. From many typical applications such angle of intersection is most preferably about 10°.

The thickness of the spade drill head at the leading point can be from approximately zero, that is, in a practical sense, minimally greater than zero, to any suitable width. For many typical applications, a preferred thickness, at the leading point is from minimally greater than zero to about .02 inch (.05 cm), more preferably about .016 inch (.04 cm). Some thickness more than minimally greater than zero is preferred to make the drill bit less fragile at the leading point. This is especially true where extremely hard but somewhat brittle materials are used, for example, carbide steels.

For many typical applications, the spade drill head of the drill bit of the invention can have an axial length approximately .25 inch (.64 cm), that is, it can be .25 inch (.64 cm) in length from the leading point to the beginning of the base. Where the spade drill head provides a compound angle of entry such as, for example, in the preferred embodiment of Figures. 1—3, the primary cutting edge providing the primary angle of entry can extend along a portion of the edge of the spade drill head equivalent to an axial length of about .035 inch (.09 cm). The secondary cutting edge which provides a secondary angle of entry can extend along the remainder of the edge of the spade drill head to the base. More preferably, however, the secondary cutting edge of the spade drill head can extend along a portion of the edge of the spade drill head equivalent to an axial length of about .1 inch (.25 cm). It is generally preferred that the ratio of the axial length of the primary cutting edge to that of the secondary cutting edge, if any, for the preferred angles of entry disclosed above, be approximately .35:1, respectively.

The novel drill bit of the present invention can be fabricated according to methods well known to the skilled of the art. Thus, for example, the spade drill head, base and collar portions can be fashioned together from a single piece of suitable drill bit material. Such materials include many well known to the skilled of the art such as, for example, carbide steels, and the like. A preferred material is grade C3 carbide steel. The unitary spade drill head, base and collar can be provided separately or in combination with a suitable shank 14. The end face of the shank can be provided with a suitable receiving void or socket. A portion of the collar or an extension therefrom is then inserted into such socket and fixed by suitable means, for example, by braising. The shank can comprise any suitable material, of which many are known to the skilled of the art, for example, high speed steel. The above-described materials and additional alternative materials and the above-described methods of fabrication and alternative methods will be within the skill of the art in view of the present disclosure. Modifications of the novel drill bit described herein, falling within the scope of the invention, will also be apparent in view of the present disclosure. Thus, for example, the entry angle of the cutting edge of the spade drill head need not be constant nor change abruptly. Rather, it can change in continuous fashion over all of a portion of its length. It is expected, however, that this modification would entail increased fabrication costs and would be less preferred.

The novel drill bit of the present invention provides a significant advance in the fabrication of fiber reinforced plastics. In particular, the novel drill bit of the invention provides a drilled hole of improved quality, that is, a drilled hole more sharply defined than was previously possible at conventional machining speeds and cycle times. Most significantly, the novel drill bit provides drilled holes with substantially no fiber-overhang and substantially no volcanoing. Accordingly, drilled holes can now be provided in fiber reinforced plastics suitable for fabrication uses requiring close tolerances, without additional processing steps subsequent to the drilling to improve the quality of the drilled hole. In addition, the drill bit of the invention can be fabricated to exact specifications at relatively low cost. It has high strength and durability and low fragility and is thus suitable for use under demanding conditions for high productivity.

While several specific embodiments of the novel drill bit of the invention have been described and illustrated in detail, the present invention is not limited to these specific embodiments. Rather, it will be understood and obvious to those skilled in the art, given the present disclosure, that the invention can be embodied otherwise than as described and illustrated, without departing from the scope of the invention as claimed.

Industrial Applicability

It will be apparent in view of the foregoing disclosure that the present drill bit invention has industrial applicability to the manufacture and assembly of fiber-reinforced plastic components including, for example, automotive vehicle body panels and airplane body panels and the like, and that it provides a drill bit for drilling sharply defined holes through fiber-reinforced plastic.

Claims

1. A rotary drill bit for drilling fiber reinforced plastics, comprising:
a spade drill head (2) comprising a central axis, a leading point (8) at its front end and a primary cutting edge (9) sloped rearward and radially outward from said leading point; characterised by
a disc-shaped base (3) integral with and axially aligned with said drill head, having a diameter substantially equal to the width of said spade drill head, wherein the radially outer edge (5) of the rearward face of said base is sufficiently sharp to form a fiber cutting edge; and
a collar (4) integral with and axially aligned with said base, having a diameter substantially less than that of said base.

2. The drill bit of claim 1 wherein said drill head, base and collar comprise carbide steel.

3. The drill bit of claim 1 wherein spade drill head provides a primary entry angle of from about 30° to about 60°.

4. The drill bit of claim 3 wherein said primary entry angle is about 45°.

5. The drill bit of claim 3 wherein a secondary cutting edge (10) of said spade drill head extends rearward and radially outward of said primary cutting edge at a secondary entry angle more acute than said primary entry angle.

6. The drill bit of claim 5 wherein said second entry angle is from about 15° to about 45°.

7. The drill bit of claim 6 wherein said secondary entry angle is about 22°.

8. The drill bit of claim 5 wherein a tertiary portion (11) of said spade drill head extends rearward of said secondary cutting edge and provides a tertiary entry angle more acute than said secondary entry angle.

9. The drill bit of claim 8 wherein said tertiary entry angle is approximately 0°.

10. The drill bit of claim 1 wherein the cutting edge of said spade drill head has a rake of about 10°.

11. The drill bit of claim 1 wherein the thickness of said spade drill head is substantially less than the diameter of said drill bit and the two faces of said spade drill head are substantially flat and are convergent toward said leading point.

12. The drill bit of claim 11 wherein the two faces of said spade drill head form an angle of intersection with the axis of said drill bit of from about 1° to about 15°.

13. The drill bit of claim 12 wherein said angle of intersection is about 10°.

14. The drill bit of claim 1 wherein the two opposing faces of said spade drill head are substantially planar.

15. The drill bit of claim 1 wherein the thickness between the two opposing faces of said spade drill head at the leading point of said spade drill head is from minimally greater than 0 to about 0.5 mm (.02 inch).

16. The drill bit of claim 15 wherein the thickness of said spade drill head at said leading point is about 0.4 mm (.016 inch).

17. The drill bit of claim 1 wherein the thickness between the two opposing faces of said spade drill head, where said spade drill head meets said base, is substantially equal to the diameter of said base.

18. The drill bit of claim 1 wherein the axial height of said spade drill head is about 6.4 mm (.25 inches).

19. The drill bit of claim 1 wherein the axial height of said primary cutting edge is about 0.9 mm (.035 inch).

20. The drill bit of claim 5 wherein the axial height of said secondary cutting edge is about 2.5 mm (.1 inch).

21. The drill bit of claim 1 wherein said base diameter is from about .19 inch to about 6.6 mm (.26 inch).

22. The drill bit of claim 1 wherein said base has an axial height of about 1.5 mm (.06 inch).

23. The drill bit of claim 1 wherein said collar is cylindrical.

24. The drill bit of claim 22 wherein said collar has a diameter of about .09 to about 3.3 mm (.13 inch).

25. The drill bit of claim 1 wherein said collar has an axial height of about 3.5 mm (.135 inch).

26. The drill bit of claim 1 further comprising a drill bit shank (14) integral with said drill bit, which shank is axially aligned with said drill bit and of diameter less than or equal to that of said base.

27. The drill bit of claim 26 wherein said shank has a diameter minimally less than that of said base.

28. The drill bit of claim 26 wherein said shank has a diameter about .025 mm (.001 inch) less than that of said base.

## Patentansprüche

1. Eine Drehbohrerkrone zum Bohren von glasfaserverstärkten Kunststoffen, umfassend:

einen Spitzbohrkopf (2) mit einer Zentralachse, einem Ansatzpunkt (8) an seinem vorderen Ende und einer primären Schneidkante (9), die vom genannten Ansatzpunkt aus nach hinten geneigt und radial nach außen verläuft; gekennzeichnet durch

einen scheibenförmigen Träger (3), der fester Bestandteil des genannten Bohrkopfes und axial dazu ausgerichtet ist, und dessen Durchmesser im wesentlichen der Breite des genannten Spitzbohrkopfes entspricht, wobei die radial äußere Kante (5) der rückwärtigen Fläche des genannten Trägers ausreichend scharf ist, um eine faserschneidende kante zu bilden; und

einen Ansatz (4), der fester Bestandteil des genannten Trägers und axial dazu ausgerichtet ist, und dessen Durchmesser wesentlich kleiner als derjenige des genannten Trägers ist.

2. Die Bohrkrone gemäß Anspruch 1, wobei der genannte Bohrkopf, Träger und Ansatz aus Hartmetall bestehen.

3. Die Bohrkrone gemäß Anspruch 1, wobei der Spitzbohrkopf einen primären Eintrittswinkel zwischen etwa 30° und etwa 60° aufweist.

4. Die Bohrkrone gemäß Anspruch 3, wobei der genannte primäre Eintrittswinkel etwa 45° beträgt.

5. Die Bohrkrone gemäß Anspruch 3, wobei eine sekundäre Schneidkante (10) des genannten Spitzbohrkopfes von der genannten ersten Schneidkante aus nach hinten und radial nach außen in einem zweiten Eintrittswinkel verläuft, der spitzer als der genannte primäre Eintrittswinkel ist.

6. Die Bohrkrone gemäß Anspruch 5, wobei der genannte sekundäre Eintrittswinkel zwischen etwa 15° und etwa 45° liegt.

7. Die Bohrkrone gemäß Anspruch 6, wobei der genannte sekundäre Eintrittswinkel etwa 22° beträgt.

8. Die Bohrkrone gemäß Anspruch 5, wobei ein tertiärer Abschnitt (11) des genannten Spitzbohrkopfes von der genannten sekundären Schneidkante aus nach hinten verläuft und einen tertiären Eintrittswinkel schafft, der spitzer als der genannte sekundäre Eintrittswinkel ist.

9. Die Bohrkrone gemäß Anspruch 8, wobei der genannte tertiäre Eintrittswinkel etwa 0° beträgt.

10. Die Bohrkrone gemäß Anspruch 1, wobei die Schneidkante des genannten Spitzbohrkopfes eine Schneidbrust von etwa 10° aufweist.

11. Die Bohrkrone gemäß Anspruch 1, wobei die Dicke des genannten Spitzbohrkopfes wesentlich geringer als der Durchmesser der genannten Bohrkrone ist und die beiden Flächen des genannten Spitzbohrkopfes im wesentlichen flach sind und in Richtung auf den genannten Ansatzpunkt zusammenlaufen.

12. Die Bohrkrone gemäß Anspruch 11, wobei die beiden Flächen des genannten Spitzbohrkopfes einen Schnittwinkel mit der Achse der genannten Bohrkrone von etwa 1° bis etwa 15° bilden.

13. Die Bohrkrone gemäß Anspruch 12, wobei der genannte Schnittwinkel etwa 10° beträgt.

14. Die Bohrkrone gemäß Anspruch 1, wobei die beiden gegenüberliegenden Flächen des genannten Spitzbohrkopfes im wesentlichen plan sind.

15. Die Bohrkrone gemäß Anspruch 1, wobei die Dicke zwischen den beiden gegenüberliegenden Flächen des genannten Spitzbohrkopfes am Ansatzpunkt des genannten Spitzbohrkopfes zwischen mindestens mehr als 0 und etwa 0,5 mm (0,02 inch) liegt.

16. Die Bohrkrone gemäß Anspruch 15, wobei die Dicke des genannten Spitzbohrkopfes am genannten Ansatzpunkt etwa 0,4 mm (0,016 inch) beträgt.

17. Die Bohrkrone gemäß Anspruch 1, wobei die Dicke zwischen den beiden gegenüberliegenden Flächen des genannten Spitzbohrkopfes, wo der genannte Spitzbohrkopf mit dem genannten Träger zusammentrifft, im wesentlichen dem Durchmesser des genannten Trägers entspricht.

18. Die Bohrkrone gemäß Anspruch 1, wobei die axiale Höhe des genannten Spitzbohrkopfes etwa 6,4 mm (0,25 inch) beträgt.

19. Die Bohrkrone gemäß Anspruch 1, wobei die axiale Höhe der genannten primären Schneidkante etwa 0,9 mm (0,035 inch) beträgt.

20. Die Bohrkrone gemäß Anspruch 5, wobei die axiale Höhe der genannten sekundären Schneidkante etwa 2,5 mm (0,1 inch) beträgt.

21. Die Bohrkrone gemäß Anspruch 1, wobei der genannte Trägerdurchmesser etwa zwischen 0,19 inch und 6,6 mm (0,26 inch) liegt.

22. Die Bohrkrone gemäß Anspruch 1, wobei der genannte Träger eine axiale Höhe von etwa 1,5 mm (0,06 inch) aufweist.

23. Die Bohrkrone gemäß Anspruch 1, wobei der genannte Ansatz zylindrisch ausgeführt ist.

24. Die Bohrkrone gemäß Anspruch 22, wobei der genannte Ansatz einen Durchmesser von etwa 0,09 bis etwa 3,3 mm (0,13 inch) aufweist.

25. Die Bohrkrone gemäß Anspruch 1, wobei der genannte Ansatz eine axiale Höhe von etwa 3,5 mm (0,135 inch) aufweist.

26. Die Bohrkrone gemäß Anspruch 1, weiterhin umfassend einen Bohrkronenschaft (14), der fester Bestandteil der genannten Bohrkrone ist, wobei der Schaft zur genannten Bohrkrone axial ausgerichtet ist und einen Durchmesser aufweist, der geringer als derjenige des genannten Trägers ist oder diesem entspricht.

27. Die Bohrkrone gemäß Anspruch 26, wobei der genannte Schaft einen Durchmesser aufweist, der zumindest geringer als derjenige des genannten Trägers ist.

28. Die Bohrkrone gemäß Anspruch 26, wobei der genannte Schaft einen Durchmesser aufweist, der etwa 0,025 mm (0,001 inch) geringer als derjenige des genannten Trägers ist.

**Revendications**

1. Mèche de perçage rotative pour percer des matières plastiques renforcées de fibres, comprenant:

une tête de mèche "à langue d'aspic" (2), possédant un axe central, une pointe avant (8) à son extrémité antérieure et une arête de coupe primaire (9) inclinée vers l'arrière et radialement vers l'extérieur à partir de cette pointe avant; caractérisé par

une embase en forme de disque (3) qui est d'une seule pièce avec la tête de perçage et alignée axialement sur cette tête, qui présente un diamètre pratiquement égal à la largeur de la tête de perçage à langue d'aspic et dont l'arête radiale extérieure (5) de la face arrière est suffisamment vive pour former une arête de coupe des fibres; et

un col (4) qui est d'une seule pièce avec l'embase et aligné axialement sur l'embase et qui possède un diamètre nettement inférieur à celui de l'embase.

2. Mèche de perçage selon la revendication 1, caractérisée en ce que cette tête de perçage, cette embase et ce col sont faits d'acier carburé.

3. Mèche de perçage selon la revendication 1, dont la tête à langue d'aspic forme un angle d'entrée primaire entre environ 30° et environ 60°.

4. Mèche selon la revendication 3 dont l'angle d'entrée primaire est d'environ 45°.

5. Mèche de perçage selon la revendication 3, dans laquelle cette arête de coupe primaire se prolonge par une arête de coupe secondaire (10) qui s'étend vers l'arrière et radialement vers l'extérieur par rapport à cette arête de coupe primaire, en formant un angle d'entrée secondaire plus aigu que cet angle d'entrée primaire.

6. Mèche de perçage selon la revendication 5 dont l'angle d'entrée secondaire est compris entre environ 15° et environ 45°.

7. Mèche de perçage selon la revendication 6, dont l'angle d'entrée secondaire est d'environ 22°.

8. Mèche de perçage selon la revendication 5, dans laquelle cette arête de coupe secondaire se prolonge vers l'arrière par une partie tertiaire (11) et forme un angle d'entrée tertiaire plus aigu que cet angle d'entrée secondaire.

9. Mèche de perçage selon la revendication 8, où cet angle d'entrée tertiaire est pratiquement nul.

10. Mèche de perçage selon la revendication 1, dans laquelle l'arête de coupe de cette tête de perçage à langue d'aspic présente un détalonnage d'environ 10°.

11. Mèche de perçage selon la revendication 1, dont l'épaisseur de cette tête de perçage à langue d'aspic est nettement inférieure au diamètre de cette mèche de percage, et les deux faces de cette tête de perçage à langue d'aspic sont pratiquement planes et convergentes vers cette pointe avant.

12. Mèche de perçage selon la revendication 11, dans laquelle les deux faces de cette tête de perçage à langue d'aspic forment un angle d'intersection avec l'axe de la tête de perçage compris entre environ 1° et environ 15°.

13. Mèche de perçage selon la revendication 12, dans laquelle cet angle d'intersection est d'environ 10°.

14. Mèche de perçage selon la revendication 1, dans laquelle les deux faces opposées de ladite tête de perçage à langue d'aspic sont pratiquement planes.

15. Mèche de perçage selon la revendication 1 dont l'épaisseur mesurée entre les deux faces opposées de la tête de perçage à langue d'aspic, à la pointe avant de cette dernière, est comprise entre une valeur un peu supérieure à zéro et environ 0,5 mm (0,02 pouce).

16. Mèche de perçage selon la revendication 1, dont l'épaisseur de cette tête de perçage à langue d'aspic, mesurée à ladite pointe avant, est d'environ 0,4 mm (0,016 pouce).

17. Mèche de perçage selon la revendication 1, dans laquelle l'épaisseur mesurée entre les deux faces opposées de cette tête de perçage à langue d'aspic, à l'endroit où cette dernière rejoint l'embase, est à peu près égale au diamètre de celle-ci.

18. Mèche de perçage selon la revendication 1, où la hauteur axiale de la tête de perçage à langue d'aspic est d'environ 6,4 mm (0,5 pouce).

19. Mèche de perçage selon la revendication 1, dans laquelle la hauteur axiale de ladite arête de coupe primaire est d'environ 0,9 mm (0,035 pouce).

20. Mèche de perçage selon la revendication 5, dans laquelle la hauteur axiale de cette arête de coupe secondaire est d'environ 2,5 mm (0,1 pouce).

21. Mèche de perçage selon la revendication 1 où le diamètre de l'embase est compris entre environ 4,8 mm (0,19 pouce) et environ 6,6 mm (0,26 pouce).

22. Mèche de perçage selon la revendication 1, où cette embase possède une hauteur axiale d'environ 1,5 mm (0,06 pouce).

23. Mèche de perçage selon la revendication 1, dans laquelle ce col est cylindrique.

24. Mèche de perçage selon la revendication 22, dans laquelle ce col a un diamètre d'environ 2,3 mm (environ 0,09 pouce) à environ 3,3 mm (environ 0,13 pouce).

25. Mèche de perçage selon la revendication 1, dans laquelle ce col possède une hauteur axiale d'environ 3,5 mm (0,135 pouce).

26. Mèche de perçage selon la revendication 1, comprenant en outre une queue de mèche de perçage (14) qui est venue d'une seule pièce avec cette mèche de perçage, qui est alignée axialement avec cette mèche de perçage et qui présente un diamètre inférieur ou égal à celui de l'embase.

27. Mèche de perçage selon la revendication 26, dans laquelle cette queue possède un diamètre un tout petit peu inférieur à celui de l'embase.

28. Mèche de perçage selon la revendication 26, dans laquelle cette queue possède un diamètre inférieur d'environ 0,025 mm (0,001 pouce) à celui de l'embase.

**0 107 651**

FIG.1

FIG.2

FIG.3

1